# EUROPÄISCHE PATENTANMELDUNG

(11) **EP 3 238 868 A1**
(43) Veröffentlichungstag der Anmeldung: **01.11.2017**
(21) Anmeldenummer: 16167367.8
(22) Anmeldetag: 27.04.2016
(51) Int. Cl.: B23K 20/12, F01D 5/12, B23K 101/00, B23K 103/14, B23K 103/18

(54) **VERFAHREN ZUM HERSTELLEN EINER SCHAUFEL FÜR EINE STRÖMUNGSMASCHINE**

(71) Anmelder: MTU Aero Engines AG, 80995 München (DE)
(72) Erfinder: Schloffer, Martin, 81247 München (DE); Smarsly, Wilfried, 81669 München (DE)

(57) **Zusammenfassung**

Die Erfindung betrifft ein Verfahren zum Herstellen einer Schaufel (10) für eine Strömungsmaschine, insbesondere für ein Flugtriebwerk, umfassend zumindest die Schritte:
- Bereitstellen wenigstens eines Schaufelblatts (16) mit einem ersten Plattformbereich (24);
- Bereitstellen wenigstens eines Schaufelfußes (12) mit einem zweiten Plattformbereich (26); und
- Verbinden des Schaufelblatts (16) und des Schaufelfußes (12) an den jeweiligen Plattformbereichen (24, 26) durch ein Reibschweißveifahren an einem gemeinsamen Fügebereich (18) der Plattformbereiche (24, 26), wobei das Schaufelblatt (16) und der Schaufelfuß (12) aus jeweils unterschiedlichen Werkstoffen bestehen.

Ein weiterer Aspekt der Erfindung betrifft eine Schaufel (10), welche durch ein derartiges Verfahren erhältlich und/oder erhalten ist.

## Beschreibung

Die Erfindung betrifft ein Verfahren zum Herstellen einer Schaufel für eine Strömungsmaschine, insbesondere für ein Flugtriebwerk. Die Erfindung betrifft weiterhin eine Schaufel für eine Strömungsmaschine.

Bei der Fertigung von Schaufeln für Strömungsmaschinen ist zur Gewährleistung einer hohen Ausfallsicherheit größte Sorgfalt geboten. Bei der Auslegung und Herstellung der Schaufeln liegt eine erhebliche Herausforderung darin, dass diese einerseits extremen mechanischen und thermischen Belastungen Stand halten sollen und andererseits ein möglichst hoher Wirkungsgrad beim Betrieb der Strömungsmaschine erreicht werden soll. Üblicherweise werden die Schaufeln einzeln hergestellt und mit einem Rotorring gefügt. Durch das Fügen der Schaufeln am Umfang des Rotorringe wird ein beschaufelter Rotor geschaffen, welcher in Strömungsmaschinen eingesetzt werden kann. Diese konventionelle Herstellung ist zwar aufwandsarm jedoch wird beispielsweise dem Umstand, dass innerhalb des beschaufelten Rotors lokal unterschiedliche Belastungsarten und Spannungsverteilungen auftreten zu wenig Rechnung getragen. So treten beispielsweise entlang der Schaufeln unterschiedliche Größenwerte von mechanischen Belastungen infolge von hochfrequenten mechanischen und aerodynamischen Anregungen sowie von Fliehkräften auf, um nur einige zu nennen. Bei unzureichender Auslegung der Schaufeln kann es zu Strukturschäden und im schlimmsten Fall zum Abreißen der Schaufeln kommen. Treten derartige Schadensfälle bei extremen Belastungen und Rotationsgeschwindigkeiten des Rotorringes auf, ist häufig die Zerstörung der Strömungsmaschine die Folge.

Aufgabe der vorliegenden Erfindung ist es, ein Verfahren zum Herstellen einer Schaufel für eine Strömungsmaschine zu schaffen, welches eine besonders exakte Einstellung von auf etwaige Belastungen abgestimmten Festigkeitsanforderungen der Schaufel ermöglicht. Eine weitere Aufgabe der Erfindung ist es, eine Schaufel für eine Strömungsmaschine zu schaffen, welche besonders exakt auf etwaige Belastungen abgestimmte Festigkeitswerte aufweist.

Die Aufgaben werden erfindungsgemäß durch ein Verfahren mit den Merkmalen des Patentanspruchs 1 sowie durch eine Schaufel gemäß Patentanspruch 9 gelöst. Vorteilhafte Ausgestaltungen mit zweckmäßigen Weiterbildungen der Erfindung sind in den Unteransprüchen angegeben, wobei vorteilhafte Ausgestaltungen des Verfahrens als vorteilhafte Ausgestaltungen der Schaufel und umgekehrt anzusehen sind.

Ein erster Aspekt der Erfindung betrifft ein Verfahren zum Herstellen einer Schaufel für eine Strömungsmaschine, insbesondere für ein Flugtriebwerk, umfassend zumindest die Schritte:
- Bereitstellen wenigstens eines Schaufelblatts mit einem ersten Plattformbereich;
- Bereitstellen wenigstens eines Schaufelfußes mit einem zweiten Plattformbereich; und
- Verbinden des Schaufelblatts und des Schaufelfußes an den jeweiligen Plattformbereichen durch ein Reibschweißverfahren an einem gemeinsamen Fügebereich der Plattformbereiche, wobei das Schaufelblatt und der Schaufelfuß aus jeweils unterschiedlichen Werkstoffen bestehen.

Die beiden Plattformbereiche können zu einer Plattform und dabei der Schaufelfuß mit dem Schaufelblatt verbunden werden. Die Plattform kann dabei ein sogenanntes Innendeckband sein. Dieses Verfahren ermöglicht es das Schaufelblatt und den Schaufelfuß getrennt voneinander und aus voneinander verschiedenen Werkstoffen bereitzustellen und anschließend durch das Reibschweißverfahren miteinander zu fügen. Dies hat den Vorteil, dass eine besonders exakte Einstellung von auf etwaige Belastungen abgestimmten Festigkeiten der Schaufel ermöglicht ist. Zusätzlich können der Schaufelfuß und das Schaufelblatt vor ihrem Verbinden beispielsweise unterschiedlichen Wärmebehandlungsverfahren unterzogen werden, bevor beide Fügeteile (hier: Schaufelblatt und Schaufelfuß) schließlich durch das Reibschweißverfahren zu der Schaufel verbunden werden. Dadurch kann die Festigkeit der Schaufel ebenfalls gezielt und für verschiedene Schaufelbereiche unterschiedlich eingestellt werden. Für das Schaufelblatt und den Schaufelfuß können beispielsweise jeweils voneinander verschiedene TiAI-Legierungen mit unterschiedlichen Eigenschaften verwendet werden. Dadurch ist es beispielsweise möglich das Schaufelblatt aus einer TiAl-Legierung herzustellen, welche kriechfester und spröder ist, als die für den Schaufelfuß bereitzustellende TiAl-Legierung. Wird das Schaufelblatt beispielsweise aus der besonders kriechfesten und spröden TiAI-Legierung bereitgestellt, so kann eine besonders belastungsgerechte Ausgestaltung des Schaufelblattes erreicht werden, was bei einer konventionellen, einteiligen Herstellung der Schaufel aus einem einzigen Werkstoff aufgrund einer benötigten Mindestduktilität der Schaufel nicht möglich wäre. Der Schaufelfuß kann beispielsweise aus einer TNM-TiAl-Legierung bereitgestellt werden, wobei TNM-TiAl auch als Titanaluminid (oder in Kurzform: γ-Titan) bezeichnet werden kann. Die Werkstoffgruppe "Titanaluminid" zeichnet sich durch eine besonders hohe Warmfestigkeit bei gleichzeitig geringer Dichte aus. Dementsprechend ist dieser Werkstoff besonders geeignet, um daraus Bauteile herzustellen, welche bei deren bestimmungsgemäßem Gebrauch hohen Temperaturen und großen Fliehkräften ausgesetzt sind. Bei dem Reibschweißverfahren werden die Fügeteile an dem gemeinsamen Fügebereich aneinander gepresst und letzterer durch Reibungswärme infolge einer Relativbewegung zwischen den Fügeteilen erwärmt. Dabei kommt es zum lokalen Schmelzen des Schaufelblattes und des Schaufelfußes zumindest in dem Fügebereich und schließlich zum Fügen (Verbinden) der Fügeteile. Der Fügebereich kann im Bereich eines unteren Fußbandes des Schaufelfußes und damit an einer hinsichtlich einer Belastung der Schaufel unkritischen Stelle liegen. Ein weiterer Vorteil des Fügens durch das Reibschweißverfahren liegt darin, dass durch das Reibschweißen dünne definierte Übergangszonen zwischen dem Schaufelblatt und dem Schaufelfuß und damit in dem Fügebereich geschaffen werden. Der Fügebereich und die Übergangszonen sind durch entsprechende geometrische Auswahl vorzugsweise dort positioniert, wo die endbearbeitete Schaufel die geringsten Belastungen bzw. die größte Querschnittsfläche aufweist. Damit sind in dem Fügebereich eventuell entstehende intermetallische Phasen unkritisch im Hinblick auf ihre geringe Duktilität. Nach dem Fügen des Schaufelblattes mit dem Schaufelfuß kann letzterer beispielsweise unter Ausbildung einer Steckverbindung mit einem Rotorgrundkörper, welcher beispielsweise als Scheibe ausgestaltet sein kann, verankert werden. Dadurch kann eine besonders einfache und sichere Verbindung zwischen der Schaufel und dem Rotorgrundkörper geschaffen werden.

In einer vorteilhaften Ausgestaltung der Erfindung ist das Reibschweißverfahren ein Linearreibschweißverfahren und/oder ein Orbitalreibschweißverfahren. Dies ist von Vorteil, da sowohl beim Linearreibschweißverfahren als auch beim Orbitalreibschweißverfahren die zu verbindenden Fügeteile (hier: Schaufelfuß und Schaufelblatt) - anders als beim Rotationsschweißen - nicht symmetrisch sein müssen. Beim Linearreibschweißverfahren wird Reibungswärme infolge einer linearen Relativbewegung zwischen den Fügeteilen erzeugt. Das Linearreibschweißverfahren stellt ein besonders aufwandsarmes Reibschweißverfahren dar, da lediglich eine Linearbewegung zwischen den Fügeteilen durchgeführt wird. Im Gegensatz dazu erfolgt bei dem Orbitalreibschweißverfahren eine Erwärmung des Fügebereichs durch eine Relativbewegung der Fügeteile in einer geschlossenen Bewegungsbahn. Die Bewegungsbahn kann beim Orbitalreibschweißverfahren beispielsweise als Kreisbahn oder als Ellipse ausgebildet sein, um nur einige mögliche Formen von Kreisbahnen zu nennen. Das Linearreibschweißverfahren kann auch zusätzlich zu dem Orbitalreibschweißverfahren und damit sozusagen in Kombination mit diesem durchgeführt werden. Eine solche Kombination aus diesen beiden Schweißverfahren ist beispielsweise dann gegeben, wenn die Bewegungsbahn sowohl gerundete als auch lineare Bahnbereiche aufweist. Ein anderes Beispiel für diese Kombination ist, wenn bei dem Schweißvorgang beispielsweise der Schaufelfuß linear bewegt wird und das Schaufelblatt auf einer Kreisbahn bewegt wird, oder umgekehrt. Ein Vorteil der Kombination aus dem Linearreibschweißverfahren und dem Orbitalreibschweißverfahren ist, dass eine besonders gleichmäßige Erwärmung der Fügeteile erreicht werden kann. Dadurch können etwaige Spannungen in dem Fügebereich und in einem Grenzbereich um diesen herum reduziert werden. Das Reibschweißverfahren kann auch ein Multi-Orbitalreibschweißverfahren sein. Beim Multi-Orbitalreibschweißverfahren können beide Fügeteile auf jeweiligen Kreisbahnen relativ zueinander bewegt werden. Dadurch kann eine besonders gleichmäßige Erwärmung der Fügeteile herbeigeführt werden.

In einer weiteren vorteilhaften Ausgestaltung der Erfindung wird ein Schaufelblatt aus einer ersten TiAI-Legierung, insbesondere einer ersten TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt. Mit anderen Worten wird zum Aufbauen oder Herstellen zumindest des Schaufelblatts eine TiAl-Legierung, insbesondere eine TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, verwendet. Somit können hochtemperaturstabile Legierungen für das Schaufelblatt verwendet werden, ohne dabei gleichzeitig etwaige Duktilitätsanforderungen an den Schaufelfuß erfüllen zu müssen.

In einer weiteren vorteilhaften Ausgestaltung der Erfindung wird ein Schaufelfuß aus einer von der ersten TiAl-Legierung verschiedenen, zweiten TiAl-Legierung bereitgestellt. Derartige TiAl-Legierungen, welche auch als Titanaluminid-Legierungen bezeichnet werden können, weisen besonders gute Festigkeitseigenschaften bei gleichzeitig besonders geringer Dichte auf. Die beiden TiAl-Legierungen können sich beispielsweise hinsichtlich ihrer jeweiligen weiteren Legierungsbestandteile (W, Mo, Nb, Co, Hf, Y, Zr, Er, Gd, Si und C) und zusätzlich oder alternativ hinsichtlich der Konzentration der jeweiligen weiteren Legierungsbestandteile unterscheiden. Durch die Variation dieser Legierungsbestandteile können die Werkstoffeigenschaften der jeweiligen TiAl-Legierungen auf besonders günstige Weise verändert werden.

In einer weiteren vorteilhaften Ausgestaltung der Erfindung wird der Schaufelfuß hergestellt, indem ein Körper aus der zweiten TiAl-Legierung bereitgestellt, geschmiedet, homogenisierungsgeglüht und anschließend zu dem Schaufelfuß geformt wird, wobei der Schaufelfuß zumindest bereichsweise geglättet wird. Der Schaufelfuß kann beispielsweise aus dem besagten Körper, welcher beispielsweise als Platte aus der zweiten TiAl-Legierung ausgebildet ist, hergestellt sein. Diese Platte kann nach deren Schmieden und Homogenisierungsglühen beispielsweise in quaderförmige Halbzeuge für die Herstellung einer Mehrzahl von Schaufelfüßen zerteilt werden. Die Halbzeuge können dann zu den Schaufelfüßen geformt werden und anschließend bereichsweise, beispielsweise an einer Teilfläche des Schaufelfußes mechanisch oder elektrolytisch bearbeitet werden, um eine metallisch blanke Fügefläche bereitzustellen. Die Teilfläche kann derjenigen Fläche entsprechen, an welcher der Schaufelfuß später an dem Fügebereich mit dem Schaufelblatt verbunden werden soll. Dies stellt ein besonders kostengünstiges Herstellverfahren dar, bei welchem mehrere Schaufelfüße aufwandsarm bereitgestellt werden können.

In einer weiteren vorteilhaften Ausgestaltung der Erfindung wird zumindest das Schaufelblatt mittels eines thermomechanischen Herstellungsverfahrens oder mittels eines additiven Herstellungsverfahrens, insbesondere durch selektives Laserschmelzen (SLM), selektives Lasersintern, Elektronenstrahlschmelzen (EBM) und/oder Laserauftragschweißen (LMD), und/oder durch heißisostatisches Pressen einer mit einem Werkstoffpulver befüllten Kapsel, aufgebaut. Ein Beispiel für ein derartiges thermomechanisches Herstellverfahren stellt ein Schmiedeverfahren dar. Das Schaufelblatt kann auch beispielsweise mittels EBM und/oder SLM unter Vakuum in einem Pulverbett (aus TiAI-Pulver) aufgebaut werden. Alternativ oder zusätzlich kann das Schaufelblatt aufgebaut werden, indem eine Ti-AI-Kapsel bereitgestellt, mit Pulver gefüllt, evakuiert, ausgeheizt, verschweißt und heißisostatisch gepresst (geHIPt) wird. Durch derartige Herstellverfahren können die Eigenschaften des Schaufelblattes besonders gezielt eingestellt werden. Zusammenfassend kann das Schaufelblatt also durch ein pulvermetallurgisches Herstellverfahren, durch ein schmelzmetallurgisches Herstellverfahren oder durch ein thermomechanisches Herstellverfahren hergestellt werden. Das Werkstoffpulver kann beispielsweise ein metallisches und zusätzlich oder alternativ keramisches Pulver sein. Ein metallisches Pulver kann auch eine Mischung aus zwei oder mehr unterschiedlichen Metallen aufweisen, wobei aus dem Pulver eine sogenannte intermetallische Verbindung durch zumindest eines der Herstellverfahren gebildet werden kann.

In einer weiteren vorteilhaften Ausgestaltung der Erfindung wird, bzw. werden der Schaufelfuß und/oder das Schaufelblatt vor dem Verbinden bzw. Fügen wärmebehandelt. Unter einer Wärmebehandlung wird im Rahmen der vorliegenden Erfindung ein Verfahren verstanden, bei welchem das betreffende Werkstück mindestens einmal über die Raumtemperatur erwärmt und mindestens einmal wieder auf Raumtemperatur abgekühlt wird. Dabei können der Schaufelfuß und das Schaufelblatt unabhängig voneinander jeweils unterschiedlichen Wärmebehandlungen unterzogen werden. Durch die getrennt durchführbare Wärmebehandlung des Schaufelfußes und des Schaufelblattes können in beiden Teilen unterschiedliche Mikrostrukturen eingestellt werden, durch welche beispielsweise die geforderten Festigkeits- und Duktilitätsanforderungen erfüllt werden können. Dem Schaufelfuß kann dadurch beispielsweise eine im Vergleich zum Schaufelblatt höhere Duktilität und Festigkeit und dafür eine geringere Kriechbeständigkeit verliehen werden, wohingegen das Schaufelblatt im Vergleich zum Schaufelfuß eine besonders hohe Kriechbeständigkeit und konstante Festigkeit bis 900 °C auf Kosten der Festigkeit bei niedriger Temperatur und geringerer Duktilität aufweist.

In einer weiteren vorteilhaften Ausgestaltung der Erfindung wird der Fügebereich im Anschluss an das Verbinden des Schaufelblatts mit dem Schaufelfuß einer lokalen Wärmebehandlung unterzogen. Dabei kann der Fügebereich nach dem Reibschweißen beispielsweise einer lokalen induktiven Wärmebehandlung unterzogen werden, um eine Zielmikrostruktur in dem Fügebereich einzustellen. Dies ist von Vorteil, da somit auch die Werkstoffeigenschaften in und an dem Fügebereich eingestellt werden können.

In einer weiteren vorteilhaften Ausgestaltung der Erfindung wird die gesamte Schaufel im Anschluss an das Verbinden des Schaufelblatts mit dem Schaufelfuß einer Auslagerungswärmebehandlung unterzogen. Dies ist von Vorteil, da durch die Auslagerungswärmebehandlung in der Schaufel etwaige Spannungen abgebaut werden können. Die Auslagerungswärmebehandlung kann durchgeführt werden bevor die gefügte Schaufel auf Endmaß bearbeitet wird.

Ein zweiter Aspekt der Erfindung betrifft eine Schaufel für eine Strömungsmaschine, insbesondere für ein Flugtriebwerk, umfassend ein Schaufelblatt und einen Schaufelfuß, wobei das Schaufelblatt durch ein Reibschweißverfahren unmittelbar mit dem Schaufelfuß unter Ausbildung eines gemeinsamen Fügebereichs verbunden ist, wobei das Schaufelblatt und der Schaufelfuß aus jeweils unterschiedlichen Werkstoffen bestehen. Die sich hieraus ergebenden Merkmale und deren Vorteile sind den Beschreibungen des ersten Erfindungsaspekts zu entnehmen.
Dabei kann das Schaufelblatt beispielsweise aus einer ersten TiAl-Legierung, insbesondere einer ersten TiAl-Legierung, welche neben Ti und Al als weiteren Legierungsbestandteil wenigstens ein Element aus der Gruppe W, Mo, Nb, Co, Hf, Y, Zr, Er, Gd, Si und C umfasst, bestehen. Der Schaufelfuß kann beispielsweise aus einer von der ersten TiAl-Legierung verschiedenen, zweiten TiAl-Legierung bestehen. Insgesamt kann die erfindungsgemäße Schaufel durch ein Verfahren gemäß dem ersten Erfindungsaspekt erhalten werden. Eine derart ausgebildete beziehungsweise hergestellte Schaufel kann in unterschiedlichen Schaufelbereichen, also beispielsweise im Schaufelfuß und im Schaufelblatt verschiedenen Festigkeitseigenschaften aufweisen, welche besonders exakt hinsichtlich zu erwartender Belastungen eingestellt sein können.

Ein dritter Aspekt der Erfindung betrifft eine Strömungsmaschine, insbesondere ein Flugtriebwerk, umfassend wenigstens eine Schaufel, welche durch ein Verfahren gemäß der ersten Erfindungsaspekt erhältlich und/oder erhalten ist und/oder nach mindestens einer Ausgestaltung einer Schaufel gemäß dem zweiten Erfindungsaspekt ausgebildet ist. Die sich hieraus ergebenden Merkmale und deren Vorteile sind den Beschreibungen des ersten und zweiten Erfindungsaspekts zu entnehmen.

Weitere Merkmale der Erfindung ergeben sich aus den Ansprüchen und den Ausführungsbeispielen. Die vorstehend in der Beschreibung genannten Merkmale und Merkmalskombinationen, sowie die nachfolgend in den Ausführungsbeispielen genannten und/oder alleine beschriebenen Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Ausführungsbeispielen nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

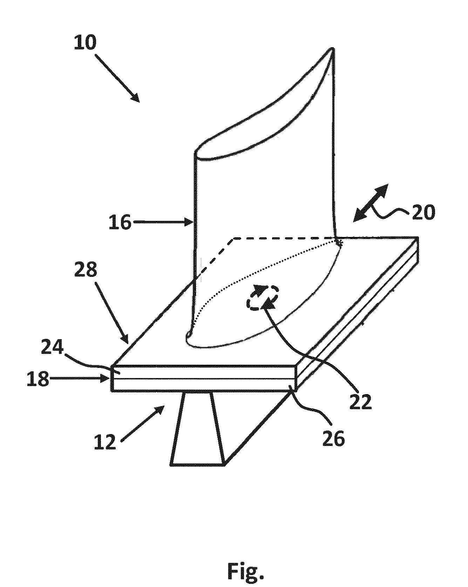

Dabei zeigt die einzige Figur eine schematische Perspektivansicht einer durch ein erfindungsgemäßes Verfahren hergestellten Schaufel für eine Strömungsmaschine.

Die Figur zeigt eine Schaufel 10 für eine hier nicht weiter dargestellte Strömungsmaschine, welche beispielsweise als Flugtuebwerk ausgestaltet sein kann. Die Schaufel 10 kann beispielsweise als Rotorschaufel für einen Schaufelring ausgebildet sein. Alternativ dazu kann die Schaufel 10 auch als Statorschaufel ausgestaltet sein.

Im vorliegenden Ausführungsbeispiel ist ein aus einer ersten TiAl-Legierung gebildetes Schaufelblatt 16 mit einem ersten Plattformbereich 24 bereitgestellt, welches neben Titan (Ti) und Aluminium (Al) als weiteren Legierungsbestandteil beispielsweise Wolfram (W) umfasst. Zur Herstellung des Schaufelblattes 16 kann beispielsweise ein additives Herstellungsverfahren, beispielsweise selektives Laserschmelzen, selektives Lasersintern, Elektronenstrahlschmelzen und/oder Laserauftragschweißen, und/oder ein heißisostatisches Pressen einer mit einem Werkstoffpulver befüllten Kapsel verwendet werden. Des Weiteren ist ein Schaufelfuß 12 mit einem zweiten Plattformbereich bereitgestellt. Der Schaufelfuß 12 ist im vorliegenden Ausführungsbeispiel durch Schmieden hergestellt und anschließend bei einer Temperatur von 1150°C über einen Zeitraum von acht Stunden homogenisierungsgeglüht worden.

Der Schaufelfuß 12 ist vorliegend aus einer von der ersten TiAl-Legierung verschiedenen, zweiten TiAI-Legierung gebildet. Das Schaufelblatt 16 und der Schaufelfuß 12 bestehen also aus jeweils unterschiedlichen Werkstoffen. Der Schaufelfuß 12 ist vorliegend hergestellt worden, indem zunächst ein Körper aus der zweiten TiAl-Legierung bereitgestellt, geschmiedet, homogenisierungsgeglüht und anschließend zu dem Schaufelfuß 12 geformt wurde. Im Anschluss daran ist der Schaufelfuß 12 zumindest bereichsweise und vorliegend an dem zweite Plattformbereich 26 geglättet worden. Bei dem zumindest bereichsweisen Glätten kann beispielsweise ein elektrolytisches Polieren oder ein spanendes Glättungsverfahren, wie z.B. Fräsen oder Schleifen durchgeführt werden. Neben dem Schaufelfuß 12 kann auch das Schaufelblatt 16 einem derartigen, bereichsweise Glätten unterzogen werden. Vorliegend wurde auch das Schaufelblatt 16 an dessen erstem Plattformbereich 24 geglättet. Wenn sowohl der Schaufelfuß 12 als auch das Schaufelblatt 16 vor dem Verbinden an jeweiligen, einen späteren Fügebereich 18 zumindest teilweise bildenden Verbindungsbereichen (des Schaufelfußes 12 bzw. des Schaufelblatts 16) dem Glätten unterworfen werden, so kann eine besonders haltbare Verbindung geschaffen werden.

Vorliegend ist gezeigt, wie das Schaufelblatt 16 durch ein Reibschweißverfahren unmittelbar mit dem Schaufelfuß 12 an dem gemeinsamen Fügebereichs 18 gefügt wird. Im Vorliegenden Ausführungsbeispiel entspricht der Fügebereich 18 dem Bereich, an welchem die beiden Plattformbereiche 24, 26 durch das Reibschweißverfahren zu einer Plattform 28 verbunden werden. Die Plattform 28 entspricht vorliegend einem Innendeckband der Schaufel 10.

Sowohl der Schaufelfuß 12 als auch das Schaufelblatt 16 wurden vor dem Fügen wärmebehandelt, was hier jedoch nicht weiter dargestellt ist. Das Reibschweißverfahren stellt im vorliegenden Ausführungsbeispiel eine Kombination aus einem Linearreibschweißverfahren und einem Orbitalreibschweißverfahren dar.

Die Kombination besteht darin, dass der Schaufelfuß 12 bei dem Reibschweißverfahren einer Linearbewegung 20 unterzogen wird (linear hin und her bewegt wird), wohingegen das Schaufelblatt 16 eine geschlossene Bahnbewegung 22 durchläuft. Durch diese Kombinationen, welche sozusagen Überlagerungen der Bewegungen darstellen, wird eine Bewegungsbahn (Relativbewegung des Schaufelfußes 12 und des Schaufelblatts 16) eingestellt. Im Anschluss an das Fügen wird der Fügebereich 18 einer lokalen Wärmebehandlung (hier nicht gezeigt) unterzogen. Des Weiteren wird die gesamte Schaufel 10 im Anschluss an das Fügen des Schaufelfußes 12 mit dem Schaufelblatt 16 einer Auslagerungswärmebehandlung (ebenfalls hier nicht weiter dargestellt) unterzogen um etwaige Spannungen in der Schaufel 10 zu verringern.

Zusammenfassend ermöglicht die Erfindung die Verbindung des spröden TiAI-Schaufelfußes 12, mit einer Rotorscheibe über eine mechanische Verbindungstechnik, obwohl diese Verbindung bei aus dem Stand der Technik bekannten Systemen (z.B. Steckverbindung) viele Probleme aufweist. Um dieses Problem in der mechanischen Verbindungsstelle zu reduzieren wird gemäß der hier beschriebenen Erfindung die Schaufel 10 an dem Schaufelfuß 12 aus einer duktileren Legierung als im Schaufelblatt 16 bereitgestellt. Dazu erfolgt die Verbindung des Schaufelblatts 16 mit dem dazu verschieden legierten Schaufelfuß 12, wobei beide Werkstoffe der Klasse der TiAl-Legierungen angehören. Dabei wird eine neue hochtemperaturbeständige und hochlegierte TiAl-Legierung mit einem bekannten TiAI-Werkstoff der die geforderten Duktilitätsansprüche erfüllt, reibverschweißt. Der Schaufelfuß 12 sowie das Schaufelblatt 16 können unabhängig voneinander, entsprechend der dafür wirtschaftlichsten Herstellroute hergestellt und wärmebehandelt oder sogar endwärmebehandelt werden um schließlich miteinander reibverschweißt und dann auf Endkontur bearbeitet zu werden.

## Patentansprüche

1. Verfahren zum Herstellen einer Schaufel (10) für eine Strömungsmaschine, insbesondere für ein Flugtriebwerk, umfassend zumindest die Schritte:
- Bereitstellen wenigstens eines Schaufelblatts (16) mit einem ersten Plattformbereich (24);
- Bereitstellen wenigstens eines Schaufelfußes (12) mit einem zweiten Plattformbereich (26); und
- Verbinden des Schaufelblatts (16) und des Schaufelfußes (12) an den jeweiligen Plattformbereichen (24, 26) durch ein Reibschweißverfahren an einem gemeinsamen Fügebereich (18) der Plattformbereiche (24, 26), wobei das Schaufelblatt (16) und der Schaufelfuß (12) aus jeweils unterschiedlichen Werkstoffen bestehen.

2. Verfahren nach Anspruch 1,
**dadurch gekennzeichnet, dass**
das Reibschweißverfahren ein Linearreibschweißverfahren und/oder ein Orbitalreibschweißverfahren ist.

3. Verfahren nach einem der Ansprüche 1 oder 2,
**dadurch gekennzeichnet, dass**
das Schaufelblatt (16) aus einer ersten TiAl-Legierung, insbesondere einer ersten Ti-Al-Legierung, welche neben Ti und Al als weiteren Legierungsbestandteil wenigstens ein Element aus der Gruppe W, Mo, Nb, Co, Hf, Y, Zr, Er, Gd, Si und C umfasst, bereitgestellt wird.

4. Verfahren nach Anspruch 3,
**dadurch gekennzeichnet, dass**
der Schaufelfuß (12) aus einer von der ersten TiAl-Legierung verschiedenen, zweiten TiAl-Legierung bereitgestellt wird.

5. Verfahren nach Anspruch 4,
**dadurch gekennzeichnet, dass**
der Schaufelfuß (12) hergestellt wird, indem ein Körper aus der zweiten TiAl-Legierung bereitgestellt, geschmiedet, homogenisierungsgeglüht und anschließend zu dem Schaufelfuß (12) geformt wird, wobei der Schaufelfuß (12) zumindest bereichsweise geglättet wird.

6. Verfahren nach einem der vorhergehenden Ansprüche,
**dadurch gekennzeichnet, dass**
zumindest das Schaufelblatt (16) mittels eines thermomechanischen Herstellungsverfahrens oder mittels eines additiven Herstellungsverfahrens, insbesondere durch selektives Laserschmelzen, selektives Lasersintern, Elektronenstrahlschmelzen und/oder Laserauftragschweißen, und/oder durch heißisostatisches Pressen einer mit einem Werkstoffpulver befüllten Kapsel aufgebaut wird.

7. Verfahren nach einem der vorhergehenden Ansprüche,
**dadurch gekennzeichnet, dass**
der Schaufelfuß (12) und/oder das Schaufelblatt (16) vor ihrem Verbinden wärmebehandelt wird bzw. werden.

8. Verfahren nach einem der vorhergehenden Ansprüche,
**dadurch gekennzeichnet, dass**
der Fügebereich (18) im Anschluss an das Verbinden des Schaufelblatts (16) mit dem Schaufelfuß (12) einer lokalen Wärmebehandlung unterzogen wird.

9. Verfahren nach einem der vorhergehenden Ansprüche,
**dadurch gekennzeichnet, dass**
die gesamte Schaufel (10) im Anschluss an das Verbinden des Schaufelblatts (16) mit dem Schaufelfuß (12) einer Auslagerungswärmebehandlung unterzogen wird.

10. Schaufel (10) für eine Strömungsmaschine, insbesondere für ein Flugtriebwerk, umfassend ein Schaufelblatt (16) und einen Schaufelfuß (12),
**dadurch gekennzeichnet, dass**
das Schaufelblatt (16) durch ein Reibschweißverfahren unmittelbar mit dem Schaufelfuß (12) unter Ausbildung eines gemeinsamen Fügebereichs (18) verbunden ist, wobei das Schaufelblatt (16) und der Schaufelfuß (12) aus jeweils unterschiedlichen Werkstoffen bestehen.

11. Schaufel (10) nach Anspruch 10,
**dadurch gekennzeichnet, dass**
das Schaufelblatt (16) aus einer ersten TiAl-Legierung, insbesondere einer ersten Ti-Al-Legierung, welche neben Ti und Al als weiteren Legierungsbestandteil wenigstens ein Element aus der Gruppe W, Mo, Nb, Co, Hf, Y, Zr, Er, Gd, Si und C umfasst, besteht.

12. Schaufel (10) nach Anspruch 11,
**dadurch gekennzeichnet, dass**
der Schaufelfuß (12) aus einer von der ersten TiAl-Legierung verschiedenen, zweiten TiAI-Legierung besteht.

13. Schaufel (10) nach einem der Ansprüche 10 bis 12, welche durch ein Verfahren nach einem der Ansprüche 1 bis 9 erhältlich und/oder erhalten ist.

14. Strömungsmaschine, insbesondere Flugtriebwerk, umfassend wenigstens eine Schaufel (10), welche durch ein Verfahren nach einem der Ansprüche 1 bis 9 erhältlich und/oder erhalten ist und/oder nach einem der Ansprüche 10 bis 13 ausgebildet ist.
